# DEMANDE DE BREVET EUROPEEN

(11) **EP 0 742 074 A1**
(43) Date de publication de la demande: **13.11.1996**
(21) Numéro de dépôt: 95401103.7
(22) Date de dépôt: 12.05.1995
(51) Int. Cl.: B23Q 35/10

(54) **Dispositif d'usinage de pièces symétriques**

(71) Demandeur: REGIE NATIONALE DES USINES RENAULT S.A., 92109 Boulogne Billancourt (FR)
(72) Inventeur: Peltier, Pierre, F-92210 Saint-Cloud (FR)
(74) Mandataire: Ernst-Schonberg, Michel

(57) **Abrégé**

Dispositif d'usinage de pièces symétriques constitué par un portique (13), un châssis (20) porté par ledit portique et monté à coulissement vertical le long du chemin de guidage (22) solidaire dudit portique (13) muni de poulies de renvoi (18) de câbles attelés audit châssis (20) et équilibré par des contrepoids (23) dans lequel les deux montants (24a,24b) du châssis supportent respectivement un premier bras (31a) muni d'un palpeur (40) destiné à venir au contact d'une pièce modèle (11) et un deuxième bras (31b) porte-outil destiné à façonner l'ébauche de la pièce à réaliser (12), caractérisé par le fait que les dits bras (31a,31b) portent conjointement avec les montants (14a,14b) et une traverse (25) du châssis un câble sans fin (45) enroulé sur des poulies (30) qui porte les attaches d'entraînement (42,43) du palpeur (40) et du porte-outil (50) localisées sur les brins du câble (45) respectivement disposés le long des bras (31a,31b).

Dispositif selon la revendication 1, caractérisé par le fait que le câble sans fin (45) s'étend de manière en soi connue le long d'un chemin de câble constitué par des profils de structure creux constitutifs des bras (31a,31b) des montants (24a,24b) et de la traverse (25) du châssis (20).

## Description

L'invention concerne un dispositif d'usinage de pièces symétriques qui permet la reproduction de la surface extérieure d'une pièce modèle sur un modèle symétrique.

Un tel usinage est courant lors du processus de fabrication des modèles de carrosseries de véhicules automobiles.

La publication FR-A-781217 décrit un dispositif constitué par un châssis sur lequel les montants supportent respectivement un premier bras palpeur au contact d'une pièce modèle, placée sur un premier chariot mobile sur des rails, tandisque l'ébauche de la pièce à réaliser, est fixée sur un deuxième chariot, au contact d'un outil de façonnage porté par un deuxième bras. Dans ce dispositif un câble sans fin, enroulé sur des poulies convenablement placées est accroché à l'un et l'autre chariot si bien que lorsque la pièce modèle est déplacée sur une certaine distance dans une direction, l'ébauche à façonner est déplacée sur la même distance dans la direction opposée.

Un tel dispositif est inapplicable à l'usinage de pièces symétriques dont la pièce modèle est rigidement reliée à l'ébauche de la pièce à usiner.

L'invention a donc pour objet un dispositif d'usinage de pièces telles que des maquettes de carrosseries qui possèdent un plan longitudinal de symétrie par rapport duquel un déplacement transversal du palpeur au contact de la partie modèle de la maquette est transformé en un déplacement transversal de sens inverse de l'outil de façonnage de la partie symétrique de la maquette.

L'invention a également pour objet un dispositif d'usinage monté à mobilité par rapport à la pièce à réaliser, susceptible d'être immobilisé dans le plan d'une section transversale de la pièce modèle. On favorise de la sorte l'usinage symétrique de l'ébauche dans un même plan de section au cours de l'exploration par le palpeur de la section correspondante de la pièce modèle.

L'invention concerne plus particulièrement un dispositif d'usinage de pièces symétriques constitué par un portique, un châssis mobile porté par ledit portique et dans lequel les deux montants du châssis supportent respectivement un bras muni d'un palpeur destiné à venir au contact d'une pièce modèle et un deuxième bras porte-outil destiné à façonner l'ébauche de la pièce à réaliser.

L'invention propose un perfectionnement du dispositif précité dans le but de favoriser l'usinage de la deuxième partie symétrique d'une maquette dont la première partie constitue la pièce modèle.

Selon l'invention les bras du châssis portent conjointement avec les montants et une traverse du châssis, un câble sans fin enroulé sur des poulies, qui porte les attaches du palpeur et du porte-outil localisées sur les brins du câble respectivement disposés le long des deux bras.

Le dispositif ainsi réalisé permet la confection rapide de maquettes complètes de carrosseries à partir d'une partie modèle de celle-ci.

D'autres caractéristiques et avantages de l'invention apparaîtront à la lecture de la description d'un mode de réalisation du dispositif en référence au dessin annexé dans lequel :
- la figure 1 est une représentation perspective du dispositif au cours de l'usinage d'une maquette de carrosserie automobile,
- la figure 2 est une vue schématique du dispositif représenté à la figure 1,
- la figure 3 est une coupe transversale du châssis du dispositif selon la ligne III de la figure 2 et sur laquelle le contour dudit châssis est représenté en traits fantômes.

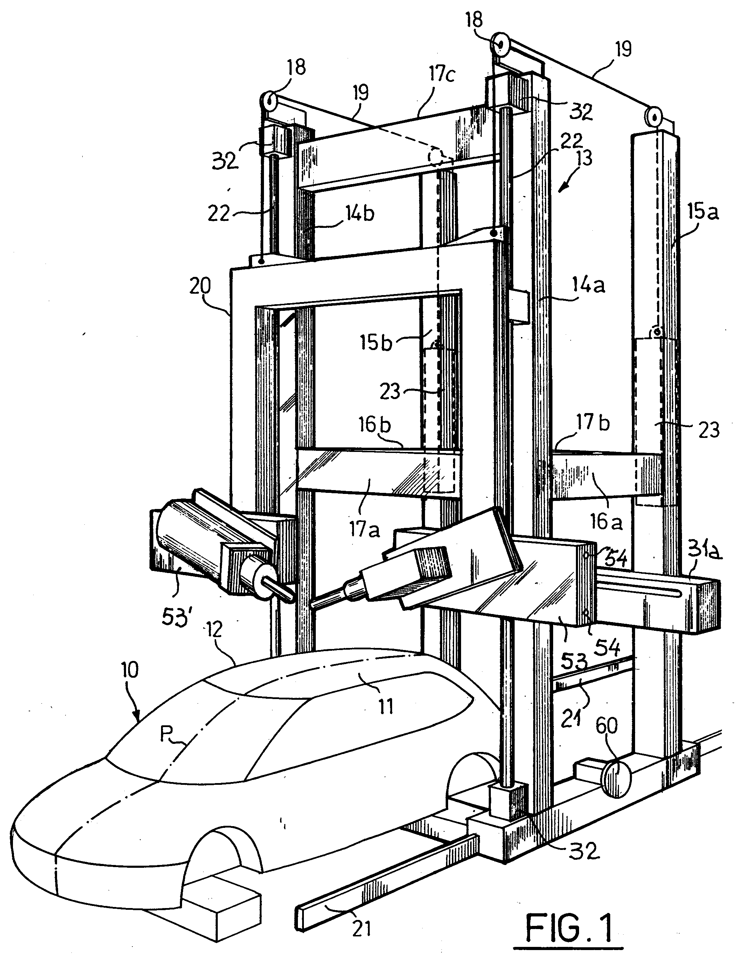

Ainsi que cela est représenté à la figure 1, une maquette 10 possède un plan de symétrie longitudinal P qui sépare la partie modèle 11 de la maquette, de la partie ébauche 12 à façonner.

Un portique 13 est constitué par quatre colonnes tubulaires creuses 14a, 14b ; 15a, 15b entretoisées par des longerons latéraux 16a, 16b et par des traverses 17a, 17b, 17c. Le portique ainsi constitué est monté à déplacement longitudinal le long de rails 21 par rapport à la maquette 10.

Les colonnes latérales droite et gauche 14a, 14b sont entretoisées à leur sommet par la traverse 17c. Chaque colonne 14a, 14b porte par ailleurs une poulie de renvoi 18 d'un câble 19 attelé à un châssis 20 qui coulisse dans le sens vertical le long d'un chemin de guidage 22 limité par des butées 32 et qui est équilibré par des contre-poids 23 accrochés respectivement aux câbles 19 attelés au châssis 20 et mobiles à l'intérieur des colonnes 15a, 15b.

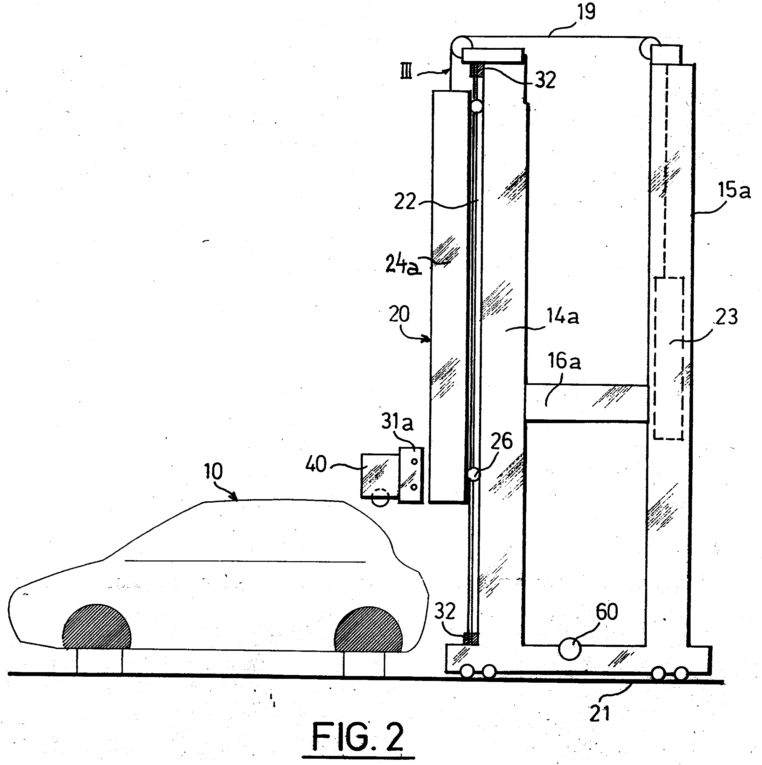

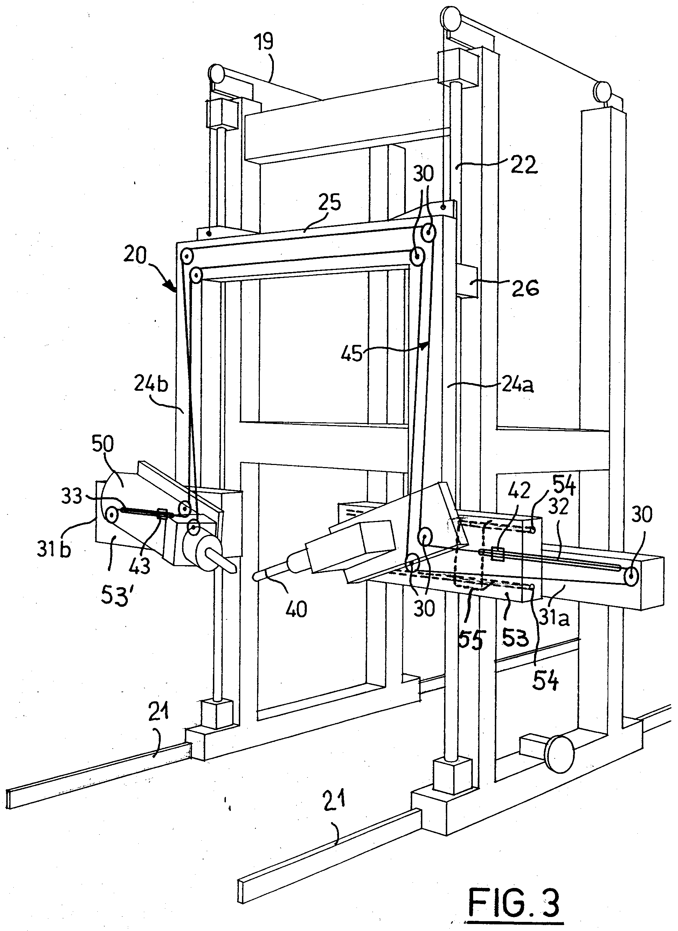

Les figures 2 et 3 montrent plus particulièrement le châssis 20. Celui-ci est constitué par assemblage d'éléments tubulaires et possède deux montants verticaux creux 24a, 24b réunis par une traverse creuse 25. Les montants 24a, 24b et la traverse 25 portent notamment les paliers de guidage 26 du châssis le long des chemins 22, et deux bras 31a, 31b. Les montants 24a, 24b et les bras 31a, 31b portent intérieurement des poulies de renvoi 30 d'un câble sans fin 45.

Le premier bras 31a est solidaire du montant 24a et porte un palpeur 40 destiné à explorer par contact une quelconque section transversale ou longitudinale de la partie modèle 11.

Le palpeur 40 est solidaire d'un chariot 53 monté à déplacement par rapport au bras 31a. A cet effet le chariot 53 réalisé dans un élément de profilé porte deux tubes de guidage 54 et se déplace par rapport à un palier 55 solidaire dudit bras 31a.

Une attache d'entraînement 42 est montée à déplacement transversal à l'intérieur du bras 31a et le long d'une coulisse 32 portée par ledit bras. L'attache 42 est également vissée au chariot 53 et possède une queue d'attelage à un câble sans fin 45 qui s'étend notamment à l'intérieur du bras 31 a.

L'attache 42 et le chariot 53 permettent ainsi de fixer le palpeur 40 et de l'entraîner manuellement le long du bras 31a.

D'une manière analogue, le deuxième bras 31b est solidaire du montant 24b et supporte un porte-outil 50 muni d'un outil tel qu'une fraise, destinée à façonner l'ébauche 12.

Le porte-outil 50 est également solidaire d'un chariot 53' monté à déplacement par rapport au bras 31b dont la structure est identique à celle du chariot 53.

Une attache d'entraînement 43 est montée à déplacement transversal à l'intérieur du bras 31b et le long d'une coulisse 33 portée par ledit bras. La fixation de l'attache 43 au chariot 53' et au câble 45 est identique à celle de l'attache 42.

La figure 3 illustre le mode de déplacement du palpeur 40 et du porte-outil 50. Les poulies 30 sont à cet effet réparties dans les profils de structure creux des bras 31a, 31b, des montants 24a, 24b et de la traverse 25 dans le but de constituer le chemin du câble sans fin 45. Les brins horizontaux du câble 45 localisés respectivement dans les bras 31a, 31b portent respectivement les attaches d'entraînement 42, 43. Cette disposition permet de déplacer manuellement le palpeur 40 au contact du modèle 11 sur une certaine distance dans le sens horizontal, transversal ou vertical et d'obtenir le déplacement correspondant de l'outil sur l'ébauche 12 dans le sens opposé.

Sans sortir du cadre de l'invention le dispositif pourra être complété par exemple par des dispositifs auxiliaires d'immobilisation 60 du portique 13 le long des rails 21 dans le but de favoriser le façonnage précis de l'ébauche 12 dans un plan transversal.

## Revendications

**1)** Dispositif d'usinage de pièces symétriques constitué par un portique (13), un châssis (20) porté par ledit portique et monté à coulissement vertical le long du chemin de guidage (22) solidaire dudit portique (13) muni de poulies de renvoi (18) de câbles attelés audit châssis (20) et équilibré par des contrepoids (23) dans lequel les deux montants (24a, 24b) du châssis supportent respectivement un premier bras (31a) muni d'un palpeur (40) destiné à venir au contact d'une pièce modèle (11) et un deuxième bras (31b) porte-outil destiné à façonner l'ébauche de la pièce à réaliser (12), caractérisé par le fait que les dits bras (31a, 31b) portent conjointement avec les montants (14a, 14b) et une traverse (25) du châssis, un câble sans fin (45) enroulé sur des poulies (30) qui porte les attaches d'entraînement (42, 43) du palpeur (40) et du porte-outil (50) localisées sur les brins du câble (45) respectivement disposés le long des bras (31a, 31b).

**2)** Dispositif selon la revendication 1, caractérisé par le fait que le câble sans fin (45) s'étend de manière en soi connue le long d'un chemin de câble constitué par des profils de structure creux constitutifs des bras (31a, 31b) des montants (24a, 24b) et de la traverse (25) du châssis (20).
